# EUROPEAN PATENT SPECIFICATION

(11) **EP 2 798 962 B1**
(45) Date of publication and mention of the grant of the patent: **07.12.2016**
(21) Application number: 14165776.7
(22) Date of filing: 24.04.2014
(51) Int. Cl.: A23L 13/40, A23D 7/015, A23B 4/22, A23B 4/027, A23L 13/60, A23L 33/00, A47K 5/12

(54) **Low-fat and low-salt fuet-style cured or cured and fermented meat product**
Fett- und salzarmes, gehärtetes oder gehärtetes und fermentiertes Fleischprodukt im Fuet-Stil
Produit de viande fermentée saumurée ou salaisonnée façon fuet à faible teneur en matière grasse

(30) Priority: 29.04.2013 ES 201330616
(43) Date of publication of application: 05.11.2014
(73) Proprietor: Elpozo Alimentacion, S.A., 30840 Alhama de Murcia (ES)
(72) Inventor: Avellaneda Goicuria, Antonio, 30840 Alhama de Murcia (Murcia) (ES); Lajarin Barquero, Juan Pedro, 30840 Alhama de Murcia (Murcia) (ES); Planes Martinez, José, 30840 Alhama de Murcia (Murcia) (ES); Melgarejo Martinez, Carmelo, 30840 Alhama de Murcia (Murcia) (ES); Andreu Piña, Carlos David, 30840 Alhama de Murcia (Murcia) (ES); Yepes Fuentes, Estefania, 30840 Alhama de Murcia (Murcia) (ES)
(74) Representative: Ungria López, Javier

(56) References cited:
- EP-A1- 0 325 315
- EP-B1- 0 498 513
- WO-A1-2012/075085
- US-A- 5 603 976
- Sharon Rady Rolfes and Eleanor Noss Whitney: "Understanding nutrition", 2002, Thomson Learning, XP002739144, ISBN: 0-534-59004-7 * page 7 *
- GLUECK C J ET AL: "Dietary fat substitutes", NUTRITION RESEARCH, ELSEVIER INC, XX, vol. 14, no. 10, 1 October 1994 (1994-10-01), pages 1605-1619, XP026324837, ISSN: 0271-5317, DOI: 10.1016/S0271-5317(05)80239-8 [retrieved on 1994-10-01]
- HÉCTOR MORA-GALLEGO ET AL: "Effect of the type of fat on the physicochemical, instrumental and sensory characteristics of reduced fat non-acid fermented sausages", MEAT SCIENCE, vol. 93, no. 3, 1 March 2013 (2013-03-01), pages 668-674, XP055186822, ISSN: 0309-1740, DOI: 10.1016/j.meatsci.2012.11.042

## Description

### Technical field

The present invention falls within the technical sector of foodstuffs, and more specifically within the industry concerned with the treatment of meat and/or cured sausages.

### Background of the invention

There is currently a high demand for food products characterized by having a healthier nutrient profile. Specifically, in the meat sector, there is growing interest in obtaining products with low fat and sodium salt content, given the beneficial effects associated with consumption thereof.

Although in the state of the art there are several patent documents that relate to the process of obtaining low-salt and low-fat meat products, none of them relates to cured and fermented products as fuet-style and sausage.

Document ES2336294 describes a method for preparing a low-fat, low-sodium cured sausage, which comprises substituting the fat with an emulsion of 1 part gelling agents/emulsifiers (including starch, among others), 8 parts fat (lard) and 6 parts water.

The invention described in this document thus consists of applying reduced-fat emulsions (45% reduction in fat with respect to pork lard) to a very specific product (Pamplona-style *chorizo)* with a long curing process and high fermentation, where the organoleptic and technological problems are very different from that of the present invention (which relates to low-fermentation fuet-style products -never *chorizo*-) which, furthermore, can be made of both pig and turkey. As such, not just the means, but also the very ends of the product object of the invention are different. Furthermore, the fat substitute employed in ES2336294 differs substantially from that of the present invention, not only in terms of the protein source used, but also in the structuring agent thereof, as they resort to the use of an enzymatic catalyst such as transglutaminase.

Document DE202012100553 U1 relates to a fat substitute made of starch, cellulose, sodium alginate, calcium phosphate and water. The ingredients are mixed and left to rest for approximately 24 hours, and then are ground to obtain a granule-type structure before being incorporated into the cured sausage paste. To prepare the cured sausage, two portions of meat are arranged: a first one that is frozen and to which the spices and fermentation cultures are added, and a second portion of fresh meat added afterwards, with the fat substitute added last of all. Alternatively, the fat analog may be incorporated into the first portion of meat, before incorporating the second portion of meat.

However, this document does not describe the necessary proportions of each one of the ingredients used. In addition, the analog described in this document lacks a source of protein whatsoever, which means that its use in certain cured sausages would be limited not only by the fact of breaching current regulations, but also because a gel of the kind described totally lacks any sort of adherence allowing it to be included at levels of more than 10 - 15%.

Document US5895677 describes a method for preparing low-calorie sausages (it also relates to salami) that include a thermo-irreversible starch gel with a texture similar to fat, that is ground according to the desired size and added to the ground meat, or may be ground together with it.

In this document, the described fat equivalent is totally different in terms of its composition and in terms of the method by which it is obtained, as it requires a heat-induced gelling process. In addition, anyone with ordinary knowledge of the art can understand that the final application is not a fermented and cured product subjected to drying, but rather a salami wherein the binding of the meat material and, as such, the incorporated analog as well, is brought about by thermally treating the piece once it has been stuffed.

Other document to be cited is, for instance, EP 0325315 A1, wherein a method for obtaining meat products, such as cooked, boiled sausages (Franckfurt sausages) or boiled meat paste containing a fat analog of reduced energy content is disclosed. Unlike the common methods for preparing fuet-style meat product, the method of EP 0325315 A1 starts from a meat emulsion and comprises a boiling step, and the final meat product has a high content of the fat analog (between 24-30% by weight).

US 5603976 A also refers to boiled meat products, the method for preparing thereof comprising a boiling step necessary for gelling the mixture. The meat products contain a fat analog in an amount higher than 20% by weight, which has a low content of fat without any source of lean meat or animal fat.

The use of fat substitutes in foods and replacers of animal fats, such as carbohydrates, is analysed by Glueck et al., (1994), Nutrition Research, vol. 14(10), pp 1605-1619. No reference is given in relation to the properties and appearance of meat products when fat analogs are used. The effect of different fats in physicochemical and organoleptic properties of meat products is revised by Mora-Gallego et al. (2013), Meat Science, 93, pp 668-674, wherein the replacement of animal fat with vegetable oil (sunflower oil), dyacylglycerols, backfat or lean meat in sausages is studied.

In this sense, WO 2012/075085 A1 discloses low-fat meat products and the method for preparing thereof, replacing the animal fat content with vegetable fat, such as oil.

In light of the prior art, the object of the invention is a new method for preparing meat products that are cured or cured and partially fermented (a cured sausage fuet-style or small-diameter *salchichón*) and subjected to dehydration, characterized in that they have low fat and salt content. In this way, it is possible to prepare healthier products through, on the one hand, the reduction in animal fat and caloric content, as a consequence of the incorporation of low calorific-power fat analogs that imitates the appearance (color, flavor and texture) of the fat granule typical of these products and, complementary, the reduction in sodium levels. In this way, products obtained are characterized in that they contain between 30 - 50 % less calories, 40 - 60% less fat, and up to 20 - 35% less sodium than a reference typical product.

### Description of the invention

The first object of the invention is a method for obtaining fuet-style sausage meat products, cured or cured and fermented (higher acidity), and dried (or dehydrated), which is characterized in that it comprises:
(a) mixing minced lean meats (preferably beef, pork, poultry, or mixtures thereof, wherein turkey is the most preferred in the case of poultry meat) until setting a maximum fat content of less than 8 - 15% by weight of the total mixture, together with at least one salt selected from the group of nitrifying salts typical of curing, such as sodium and/or potassium nitrites and nitrates, optionally including an amount of sodium chloride, or a mixture of sodium chloride and a set of food-grade organic (preferably potassium lactate, citrate, tartrate and/or glutamate) and inorganic (preferably magnesium, potassium and/or calcium chloride) alkaline and alkaline earth salts in a ratio preferably comprised between 1:1 and 2.5:1; in addition to the sugars and spices typical of these products. If a fermented product is the desired outcome, starter cultures may optionally be added (of the sort that are a mixture of *lactobacillus* and *staphylococcus),* in a sufficient quantity to ensure its implantation and right level of acidification to ensure a final pH value comprised between 5.2 and 5.8. The mixing can be carried out in a mixer that is provided with a vacuum pump, where the temperature range of the mixture is preferably comprised between -4 and -2°C, and in vacuum conditions;
(b) next, a low calorific-power fat analog is incorporated, consisting of a whitish gel that perfectly imitates the appearance and rheological properties of animal fat, characterized in that it has a low calorie content, comprised between 45 - 100 kcal/100 g, which is previously minced (preferably by plate) to a size of between 3 to 10 mm, depending on the application, in an amount comprised between 5% and 15% by weight, preferably between 10% and 15% by weight of the mixture, followed by kneading and mixing in vacuum conditions until the desired meat and fat grain is obtained, and without exceeding a temperature of 0°C to 2°C, preferably without exceeding a temperature of -4°C to 2°C depending on whether the paste will be left to mature or not before being stuffed, said fat analog composed of: ground lean meat with a fat content of less than 5% and a source of animal fat contained in a percentage comprised between 1% and 20% by weight, mixed with water, at least one source of starch, at least one thickening agent, and at least one gelling agent;
(c) filling with a vacuum sausage stuffer (preferably 1000 mbar) into natural or artificial casing with a variable diameter, preferably comprised within a range of 35 to 50 mm;
(d) finally, the product obtained in the preceding stage is subjected to a curing or curing and fermentation process, under standard conditions, in maturation chambers preferably equipped with automatic control of relative humidity, temperature and air speed, until a desirable level of dehydration is reached, which depends on the diameter and nature of the product, but preferably comprised between 35 - 45% reduction with respect to the initial weight of the piece.

The object of the invention is likewise a fuet-style meat product obtainable by means of the process described above.

An additional object of the invention is a method for preparing the low calorific-power fat analog added in stage (b) of the process, which consists of a gel with a low amount of energy as compared to any of the sources of animal fat (preferably pork lard or bacon, or turkey, duck or beef fat) commonly used in formulation of cured or cured/fermented and dried meat products, wherein said method comprises:
(a) grinding any kind of lean meat (preferably from 5 to 30% by weight) with a fat content of less than 5% (preferably lean pork, turkey or beef meat), together with a source of animal fat (any kind of fatty pork, turkey or beef meat with a fat content comprised between 45 and 75%), in a percentage comprised between 1 and 20% by weight, and mixing vigorously with water (preferably 30 to 70% by weight), at least one source of starch or any polysaccharide (preferably 0.5% to 30% by weight), at least one thickening agent (preferably 0.1% to 10% by weight), and at least one gelling agent (preferably 0.1% to 20% by weight) until obtaining a homogeneous paste;
(b) letting it rest for approximately 24 - 48 h in refrigeration (preferably from 0 to 2°C) until obtaining a whitish gel with appropriate firmness and texture to allow subsequent handling and grinding according to the desired size. It may optionally be subjected to a thermal pasteurization process (60 - 80°C) for the purpose of regularizing its rheological properties and increasing its subsequent preservation.

Finally, the low calorific-power fat analog obtained by means of the above method is object of the invention, wherein said product is an intermediate product of the final meat product, the latter of which is derived from the former only by means of the final stages of the process.

### Detailed description of the invention

The preferred percentages of the various ingredients of the mixture used to manufacture the meat product object of the invention are described in detail below:

| **Essential ingredients** | **Percentage (%)** |
|---|---|
| Lean meat with a fat content of less than 15 % | 65-85 |
| Low calorific-power analog | 5-15 |
| Salts, sugars, mixture of spices | 5-15 |

| **Optional ingredients** | **Percentage (%)** |
|---|---|
| Fatty meats with a fat content of less than 60 % | 5-15 |
| Starter cultures | 0.5-1.5 |

Below, as example, a specific and preferred embodiment of the method of the invention is described in detail. In said specific embodiment, the process may be carried out using the following ingredients:

| **Essential ingredients** | **Percentage (%)** |
|---|---|
| Lean meat with a fat content of 5 % | 56 |
| Lean meat with a fat content of 10 % | 15 |
| Low calorific-power analog | 13 |
| Salts, sugars, and mixture of spices | 8.25 |
| Fatty meats with a fat content of 60 % | 7 |
| Starter cultures | 0.75 |

Said process may comprise:
(a) mixing 71% by weight of lean pork/turkey meat together with 5% by weight of a mixture of curing salts, sugars and spices in a mixer provided with a vacuum pump, at a temperature of -4°C;
(b) incorporating 13% by weight of a low calorific-power fat analog (comprised between 45 - 100 kcal/100 g), which is previously minced to a size of 3 to 10 mm, together with the rest of the mixture of salts and spices, followed by kneading and mixing in vacuum conditions, without exceeding 0 - 2°C;
(c) filling with a vacuum sausage stuffer into natural or artificial casing with a diameter comprised between 35 and 50 mm;
(d) finally, the product obtained in the preceding stage is subjected to a curing process under standard conditions, in maturation chambers equipped with automatic control of relative humidity, temperature and air speed, until reaching a level of dehydration corresponding to a 35 - 45% reduction with respect to the initial weight of the piece.

A further object of the invention is a fuet-like meat product obtainable by the claimed process. Specifically, a fuet-style sausage, preferably of pork or poultry meat with sensory characteristics that are very similar, in terms of flavor, scent and texture, to the product commonly known as fuet-style *salchichón* sausage, both of pork and turkey, but with the nutritional advantage of containing between 30% and 60% less fatty material, normally comprised between 18 and 30% by weight of the product, which implies a reduction in energy content of more than 30%, in addition to containing between 0.8% and 1.3% of sodium, i.e. a reduction in salt of between 20% and 35% with respect to typical products.

## Claims

1. Method for obtaining a fuet-style sausage meat products that are cured or cured and fermented, and subjected to dehydration, **characterized in that** it comprises:
(a) mixing at least one source of minced lean meat together with at least one nitrifying curing salt where, if the desired meat product is cured and fermented, the mixture is supplemented with at least one starter culture;
(b) incorporating a low calorific-power fat analog, containing between 45 and 100 kcal/100 g, which is previously minced, in an amount comprised between 5% and 15% by weight of the mixture, followed by mixing in vacuum conditions without exceeding a temperature of 0°C to 2°C, said fat analog consisting of a whitish gel that imitates the appearance and rheological properties of animal fat, composed of: ground lean meat with a fat content of less than 5% and a source of animal fat contained in a percentage comprised between 1% and 20% by weight, mixed with water, at least one source of starch, at least one thickening agent, and at least one gelling agent;
(c) filling the previously obtained mixture into natural or artificial casing;
(d) finally, the product obtained in the preceding stage is subjected to a curing or curing and fermentation process.

2. Method according to claim 1, wherein the lean meat is pork, beef or poultry meat, or a combination thereof.

3. Method according to claim 2, wherein the poultry meat is turkey meat.

4. Method according to any one of the claims 1 to 3, wherein the mixture in stage (a) is supplemented with at least one salt selected from the group of organic or inorganic salts with alkaline and alkaline earth ions, as well as any combination thereof.

5. Method according to any one of the claims 1 to 4, wherein the mixture in stage (a) is supplemented with sugars and/or spices.

6. Method according to any one of the claims 1 to 5, wherein the mixing in stage (a) is carried out in vacuum conditions at a temperature of between -4°C and -2°C.

7. A fuet-style meat product obtainable by a method according to any one of the claims 1 to 6.

8. Method for preparing the low calorific-power fat analog added in stage (b) according to any one of the claims 1 to 6, **characterized in that** it comprises:
(a) grinding lean meat with a fat content of less than 5%, together with a source of animal fat in a percentage comprised between 1 % and 20% by weight, and mixing with water, at least one source of starch, at least one thickening agent, and at least one gelling agent until obtaining a homogeneous paste;
(b) letting it rest in refrigeration until obtaining a whitish gel which consists of the low calorific-power fat analog.

9. Method according to claim 8, **characterized in that** it is subjected to an additional stabilizing stage (c) by means of thermal treatment.

10. Low calorific-power fat analog obtained by a method according to the claims 8 or 9.

## Patentansprüche

1. Verfahren für die Herstellung von Fleischwursterzeugnissen im Fuet-Stil, die gepökelt oder gepökelt und fermentiert und einer Dehydration unterzogen werden, **dadurch gekennzeichnet, dass** es umfasst:
(a) Mischen wenigstens einer Quelle mageren Hackfleisches mit wenigstens einem Nitridpökelsalz, wobei, wenn das gewünschte Fleischerzeugnis gepökelt und fermentiert wird, dem Gemisch wenigstens eine Starterkultur zugeführt wird;
(b) Beimengen eines Fettersatzstoffes geringen Brennwertes, der zwischen 45 und 100 kcal/100 g umfasst, der zuvor gehackt wird, in einem Umfang der zwischen 5 und 15 Gew.-% des Gemisches beträgt, gefolgt von dem Mischen, unter Vakuumbedingungen ohne die Überschreitung einer Temperatur von 0°C bis 2°C, des Fettersatzstoffes, der aus einem weißlichen Gel besteht, das das Erscheinungsbild und die rheologischen Eigenschaften von Tierfett imitiert, bestehend aus: zermahlenem Magerfleisch mit einem Fettgehalt von weniger als 5% und einer Quelle eines Tierfettes, das in einem Prozentsatz enthalten ist, der zwischen 1 und 20 Gewichtsprozent liegt, gemischt mit Wasser, wenigstens einer Quelle von Stärke, wenigstens einem Verdickungsmittel und wenigstens einem Geliermittel;
(c) Füllen des zuvor erzeugten Gemisches in eine natürliche oder künstliche Umhüllung; und
(d) schließlich Aussetzen des Erzeugnisses, das in der vorherigen Phase hergestellt wurde, einem Pökel- oder Pökel- und Fermentierprozess.

2. Verfahren nach Anspruch 1, bei dem das Magerfleisch Schwein, Rind oder Geflügelfleisch oder eine Kombination aus diesen ist.

3. Verfahren nach Anspruch 2, bei dem das Geflügelfleisch Truthahnfleisch ist.

4. Verfahren nach einem der Ansprüche 1 bis 3, bei dem dem Gemisch in Phase (a) wenigstens ein Salz hinzugefügt wird, das aus der Gruppe organischer oder anorganischer Salze mit alkalischen und Erdalkalischen Ionen wie auch einer beliebigen Kombination aus diesen gewählt ist.

5. Verfahren nach einem der Ansprüche 1 bis 4, bei dem dem Gemisch bei Phase (a) Zucker und/oder Gewürze hinzugefügt wird.

6. Verfahren nach einem der Ansprüche 1 bis 5, bei dem das Mischen in Phase (a) in Vakuumbedingungen bei einer Temperatur zwischen -4°C und -2°C ausgeführt wird.

7. Fleischerzeugnis, das man mit einem Verfahren gemäß einem der Ansprüche 1 bis 6 herstellen kann.

8. Verfahren für die Vorbereitung eines Fettersatzstoffes geringen Brennwertes, der in Phase (b) hinzugefügt wird, gemäß einem der Ansprüche 1 bis 6, **dadurch gekennzeichnet, dass** es umfasst:
(a) Zermahlen von Magerfleisch mit einem Fettgehalt von weniger als 5% zusammen mit einer Quelle von Tierfett in einem Prozentsatz zwischen 1 und 20 Gewichtsprozent und Mischen mit Wasser, wenigstens einer Quelle von Stärke, wenigstens einem Verdickungsmittel und wenigstens einem Geliermittel, bis man eine homogene Paste erhält; und
(b) Ruhenlassen bei Kühlung, bis man ein weißliches Gel erhält, das aus dem Fettersatzstoff geringen Brennwertes besteht.

9. Verfahren nach Anspruch 8, **dadurch gekennzeichnet, dass** es Gegenstand einer zusätzlichen Stabilisierungsphase (c) mit Hilfe einer Wärmebehandlung ist.

10. Fettersatzstoff geringen Brennwertes, den man mit einem Verfahren gemäß den Ansprüchen 8 oder 9 erhält.

## Revendications

1. Procédé d'obtention de produits de viandes de saucisses de style fuet qui sont salaisonnés ou salaisonnés et fermentés, et soumis à une déshydratation, **caractérisé en ce qu'**il comprend :
(a) le mélange d'au moins une source de viande maigre hachée avec au moins un sel nitrifiant de salaison où, si le produit de viande souhaité est salaisonné et fermenté, le mélange est additionné d'au moins une culture de démarrage ;
(b) l'incorporation d'un analogue de graisse de faible pouvoir calorifique, contenant de 45 à 100 kcal/100 g, lequel est préalablement haché, dans une quantité de 5 % à 15 % en masse du mélange, suivie par le mélange dans des conditions sous vide sans dépasser une température de 0°C à 2°C, ledit analogue de graisse étant constitué d'un gel blanchâtre qui imite l'apparence et les propriétés rhéologiques de graisse animale, constitué de : viande maigre broyée avec une teneur en graisse inférieure à 5 % et une source de graisse animale contenue dans un pourcentage de 1 % à 20 % en masse, mélangée avec de l'eau, au moins une source d'amidon, au moins un agent épaississant, et au moins un agent gélifiant ;
(c) l'introduction du mélange préalablement obtenu dans un tubage naturel ou artificiel ;
(d) finalement, le produit obtenu dans l'étape précédente est soumis à un procédé de salaison ou de salaison et fermentation.

2. Procédé selon la revendication 1, dans lequel la viande maigre est du porc, du boeuf ou de la viande de volaille, ou une combinaison de celles-ci.

3. Procédé selon la revendication 2, dans lequel la viande de volaille est de la viande de dinde.

4. Procédé selon l'une quelconque des revendications 1 à 3, dans lequel le mélange dans l'étape (a) est additionné d'au moins un sel choisi dans le groupe de sels organiques ou inorganiques avec des ions alcalins et alcalino-terreux, ainsi que des combinaisons de ceux-ci.

5. Procédé selon l'une quelconque des revendications 1 à 4, dans lequel le mélange dans l'étape (a) est additionné de sucres et/ou d'épices.

6. Procédé selon l'une quelconque des revendications 1 à 5, dans lequel le mélange dans l'étape (a) est réalisé dans des conditions de vide à une température de -4°C à -2°C.

7. Produit de viande de style fuet pouvant être obtenu par un procédé selon l'une quelconque des revendications 1 à 6.

8. Procédé de préparation de l'analogue de graisse de faible pouvoir calorifique ajouté dans l'étape (b) selon l'une quelconque des revendications 1 à 6, **caractérisé en ce qu'**il comprend :
(a) le broyage de viande maigre avec une teneur en graisse inférieure à 5 %, avec une source de graisse animale dans un pourcentage de 1 % à 20 % en masse, et le mélange avec de l'eau, au moins une source d'amidon, au moins un agent épaississant, et au moins un agent gélifiant jusqu'à l'obtention d'une pâte homogène ;
(b) le laisser reposer en réfrigération jusqu'à l'obtention d'un gel blanchâtre qui est constitué de l'analogue de graisse de faible pouvoir calorifique.

9. Procédé selon la revendication 8, **caractérisé en ce qu'**il est soumis à une étable de stabilisation supplémentaire (c) au moyen d'un traitement thermique.

10. Analogue de graisse de faible pouvoir calorifique obtenu par un procédé selon la revendication 8 ou 9.
